Europäisches Patentamt

European Patent Office

Office européen des brevets

(19)

(11) **EP 0 740 494 A2**

(12) **EUROPÄISCHE PATENTANMELDUNG**

(43) Veröffentlichungstag:
30.10.1996 **Patentblatt 1996/44**

(51) Int. Cl.$^6$: **H05B 41/29**, H05B 41/04

(21) Anmeldenummer: 96106090.2

(22) Anmeldetag: **17.04.1996**

(84) Benannte Vertragsstaaten:
**BE DE FR GB IT NL**

(30) Priorität: **27.04.1995 DE 19515510**

(71) Anmelder: **Patent-Treuhand-Gesellschaft
für elektrische Glühlampen mbH
81543 München (DE)**

(72) Erfinder:
• **Huber, Andreas
82216 Maisach (DE)**
• **Hirschmann, Günther
81827 München (DE)**

(54) **Schaltungsanordnung zum Impulsbetrieb von Entladungslampen**

(57)     Die Erfindung betrifft eine Schaltungsanordnung zum Impulsbetrieb einer Entladungslampe (EL), insbesondere einer Hochdruckentladungslampe, mit einer Gleichspannungsquelle (OWF), mit einer Halbbrücke aus zwei Schaltelementen (S1, S2), einem Blindwiderstand (L, Ck), der mit der Entladungslampe (EL) in Reihe geschaltet ist, und einer Einrichtung (Z; CR) zum Zünden der Entladungslampe (EL). Erfindungsgemäß hat der Blindwiderstand (L, Ck) eine nichtlineare Reaktanz (L).

FIG. 1

Printed by Rank Xerox (UK) Business Services
2.13.8/3.4

**Beschreibung**

Diese Erfindung bezieht sich auf eine Schaltungsanordnung zum Impulsbetrieb einer Entladungslampe, insbesondere einer Hochdruckentladungslampe gemäß dem Oberbegriff von Anspruch 1 sowie auf ein elektronisches Vorschaltgerät, welches eine derartige Schaltungsanordnung aufweist.

Üblicherweise wird beim Betrieb von Entladungslampen die Amplitude des Lampenstroms zeitlich konstant gehalten. Die Kurvenform des Stromes, meist begründet in der technischen Realisierbarkeit der Vorschaltgeräte, variiert dabei zwischen einer sinus-, dreieck-, bzw. rechteckförmigen Lampenstrom-Wellenform.

Untersuchungen haben gezeigt, daß sich über eine Betriebsart, bei der die Energieeinspeisung in die Lampe hauptsächlich durch zeitlich kurze, aufeinanderfolgende Impulse (auch Impulsgruppen) erreicht wird, völlig andere lichttechnische Parameter bei bestimmten Typen von Entladungslampen ergeben können. Dabei ist zu beachten, daß die mittlere eingespeiste Leistung, trotz Impulsbetrieb, nicht die konstruktionsbedingte angegebene Lampenleistung übersteigen muß, um die Veränderungen der lichttechnischen Parameter zu erzeugen. Beispielsweise können bei Natriumdampf-Hochdrucklampen allein über die elektrischen Betriebsbedingungen ein Lichtspektrum mit einer ähnlichsten Farbtemperatur von 3000 Kelvin und mehr erzeugt werden.

Bei dieser Pulsbetriebsart wird mit einer bestimmten Wiederholfrequenz fw (z.B. 150 - 400 Hz) kurzzeitig eine große Leistung in die Lampe eingespeist. Diese Pulsleistung kann beispielsweise um mehr als den Faktor 20 über der mittleren Lampenleistung liegen. Diese Hochleistungsphase ("zweiter Betriebszustand") kann entweder aus einem einzelnen Puls oder auch aus einer Reihe von Pulsschwingungen (Impulsgruppe, Burst) bestehen. Diese Hochleistungsphase wird oft auch als Tastphase bezeichnet, da für die Erzeugung dieses Impulspaketes die Betriebsart des Vorschaltgerätes umgeschaltet (umgetastet) werden muß. Die Dauer der Tastphase beträgt typischerweise nur Bruchteile der Periodendauer der Wiederholfrequenz (z.B. 1/20 Tw). Zwischen den Tastphasen liegt eine Haltephase ("erster Betriebszustand"), in der gerade soviel Leistung in die Lampe eingespeist wird, daß die Entladung bis zum Eintreffen des nächsten Leistungsimpulses aufrechterhalten werden kann. Andernfalls wäre eine erneute Zündung bei jeder Tastphase erforderlich.

Eine Schaltungsanordnung zum Impulsbetrieb von Hochdruckentladungslampen ist beispielsweise aus der DE 40 39 186 bekanntgeworden. Dabei liegt eine Hochdruckentladungslampe über einer Halbbrücke bestehend aus zwei Leistungsschaltern an einer Gleichspannungsquelle an. In Reihenschaltung mit der Lampe befindet sich ein Blindwiderstand, der u.a. von einer Lampendrossel gebildet wird. Zum Verändern der Energiespeicherkapazität im Lampenkreis ist parallel zum bereits bestehenden Blindwiderstand ein weiterer Blindwiderstand zuschaltbar. Durch den zusätzlich zuschaltbaren Blindwiderstand werden die unterschiedlichen elektrischen Parameter in der Tastphase bzw. der Haltephase im Lampenkreis realisiert.

Der Nachteil dieser Anordnung besteht darin, daß außer den beiden Schaltelementen der Halbbrücke ein weiteres Leistungsschaltelement erforderlich ist, um den zusätzlichen Blindwiderstand zuschalten zu können. Dieser verursacht zum einen eine relativ große Verlustleistung, die der Spannungsabfall zusammen mit dem Impulsstrom an dem eingeschalteten Leistungsschalter verursacht. Zum anderen werden relativ hohe Kosten verursacht, wenn der Leistungsschalter z.B. als Halbleiterschalter ausgeführt wird, da dieser auf eine Sperrspannung von größer 400 Volt für Flußströme von größer als 30 Ampere dimensioniert werden muß. Darüber hinaus ist auch ein zusätzliches Schaltungsbauelement erforderlich, um den zusätzlichen Blindwiderstand zu realisieren. Wie der Hauptblindwiderstand entlang dem Kreis muß auch der zusätzliche Blindwiderstand wegen der Zündspannung der Entladungslampe hochspannungsfest ausgeführt werden.

Der Erfindung liegt daher das technische Problem zugrunde, eine Schaltungsanordnung zum Impulsbetrieb von Entladungslampen und ein entsprechendes elektronisches Vorschaltgerät anzugeben, bei der die Anzahl von Schaltungselementen weiter reduziert ist.

Dieses Problem wird gelöst mit einer Schaltungsanordnung mit den Merkmalen des Patentanspruchs 1 und mit einem elektronischen Vorschaltgerät mit den Merkmalen des Patentanspruchs 8. Vorteilhafte Ausgestaltungen dieser Anordnung ergeben sich aus den Unteransprüchen.

In einem Ausführungsbeispiel der Erfindung weist die Schaltungsanordnung zum Impulsbetrieb einer Entladungslampe eine Halbbrücke aus zwei Schaltelementen auf. Die Halbbrücke erzeugt eine Rechteckwechselspannung am Brückenmittelpunkt (am Verbindungspunkt zwischen den Schaltelementen). In Reihe mit der Lampe ist ein Blindwiderstand geschaltet. Die Schaltungsanordnung weist ferner eine Einrichtung zum Zünden der Lampe auf. Erfindungsgemäß ist der Blindwiderstand eine nichtlineare Reaktanz.

Der Aufbau dieser Schaltungsanordnung erfordert im Gegensatz zum Stand der Technik lediglich zwei Leistungsschalter und lediglich einen einzigen Lampenkreis-Blindwiderstand. Die Umschaltung zwischen zwei Betriebszuständen (erster Betriebszustand "Haltephase"; zweiter Betriebszustand "Tastphase") erfolgt durch den Blindwiderstand, der eine nichtlineare Reaktanz hat. Vorzugsweise ist diese Reaktanz zwischen im wesentlichen zwei Werten schaltbar. Durch geeignete Dimensionierung lassen sich somit die geeigneten Betriebsströme für die Tastphase bzw. die Haltephase erzielen. Das Verhältnis aus den beiden Reaktanzwerten liegt vorzugsweise zwischen 10 und 50 und beträgt besonders bevorzugt etwa 40.

In einem besonders bevorzugten Ausführungsbeispiel weist der Blindwiderstand des Lampenkreises (Lampendrossel) eine nichtlineare Induktivität auf.

Die Nichtlinearität der Induktivität kann vorzugsweise dadurch erzielt werden, daß die nichtlineare Reaktanz einen Ferritkern mit wenigstens teilweise verjüngtem Mittelsteg aufweist. Die nichtlineare Reaktanz kann auch zwei Ringkerne unterschiedlicher Materialeigenschaften aufweisen. Dabei ist vorzugsweise einer der Ringkerne ein niederpermeabler Pulverkern mit hoher Sättigungsmagnetisierung, und der andere Ringkern ist ein hochpermeabler Ferritkern mit kleiner Sättigungsmagnetisierung. Beide Ringkerne sind übereinander montiert.

Das erfindungsgemäße Vorschaltgerät weist eine zuvor angegebene Schaltungsanordnung auf. Zur Ansteuerung der Schaltelemente der Schaltungsanordnung ist eine Steuerschaltung vorgesehen.

Vorzugsweise liegt im ersten Betriebszustand der Betriebsstrom zwischen 0,3 Ampere und 0,5 Ampere und die Frequenz zwischen 80 kHz und 100 kHz. Demgegenüber liegt im zweiten Betriebszustand der Betriebsstrom zwischen 20 Ampere und 30 Ampere und die Frequenz zwischen 15 kHz und 25 kHz. Besonders bevorzugt wird eine Frequenz von 20 kHz im zweiten Betriebszustand und von 80 kHz im ersten Betriebszustand. In einem bevorzugten Ausführungsbeispiel liegt das zeitliche Verhältnis des ersten Betriebszustandes zu dem zweiten Betriebszustand etwa zwischen 10 und 30; die Dauer des zweiten Betriebszustandes (Tastphase) beträgt zum Beispiel 200 Mikrosekunden bei einer Wiederholfrequenz von zum Beispiel 200 Hz.

In einem besonders bevorzugten Ausführungsbeispiel des elektronischen Vorschaltgeräts sind die Steuerschaltung und die Leistungsschaltungsanordnung induktiv miteinander gekoppelt. Vorzugsweise wird dazu ein Steuertrafo mit einer Primärwicklung und zwei Sekundärwicklungen verwendet. Vorzugsweise werden als Schaltelemente Leistungshalbleiter, und insbesondere Insulated Gate Bipolar Transistoren (IGBT) verwendet. Diese Leistungshalbleiter sind in einfacher Weise anzusteuern und besitzen niedrige Einschaltverluste bei hohen Schaltströmen.

In einem besonders bevorzugten Ausführungsbeispiel erfolgt die Zündung der Lampe durch eine Zündvorrichtung, die durch mindestens eine zusätzliche Wicklung auf der nichtlinearen Reaktanz gebildet ist. Damit erhält die nichtlineare Reaktanz eine weitere Funktion, die darin besteht, den Zündimpuls zu erzeugen.

Die Zündung der Entladungslampe kann auch mittels einer Kapazität erfolgen, die parallel zu der Entladungslampe geschaltet ist. Diese Kapazität bildet zusammen mit der nichtlinearen Reaktanz einen Serienschwingkreis. Bei dieser Ausführungsform entfällt die zusätzliche Wicklung auf der Reaktanz sowie die Schaltungskomponenten zur Erzeugung eines Spannungsimpulses an der zusätzlichen Wicklung.

Eine weitere Ausführungsform des erfindungsgemäßen Vorschaltgeräts ist dadurch gekennzeichnet, daß anstelle eines am Ausgang der Gleichspannungsquelle angeordneten Zwischenkreiskondensators zwei in Reihe geschaltete Kapazitäten angeordnet sind, wobei der Verbindungspunkt der beiden Kapazitäten mit der Entladungslampe verbunden ist. Damit entfällt ein Koppelkondensator, was das Bauvolumen der Gesamtanordnung wesentlich reduziert. Weiterhin bietet diese Ausführungsform den Vorteil, daß die in Reihe geschalteten Kapazitäten vorzugsweise Elektrolytkondensatoren sind, die bei dem Impulsbetrieb im Gegensatz zu dem Koppelkondensator in Form eines üblicherweise verwendeten Folienwickelkondensators keine Geräusche emittiert.

Weitere Vorteile, Merkmale und Ausführungsbeispiele der vorliegenden Erfindung ergeben sich aus der nachfolgenden Beschreibung von Ausführungsbeispielen in Verbindung mit der Zeichnung.

In der Zeichnung zeigen:

Fig. 1      ein erstes Ausführungsbeispiel der erfindungsgemäßen Schaltungsanordnung;

Fig. 2      ein zweites Ausführungsbeispiel der erfindungsgemäßen Schaltungsanordnung;

Fig. 3a und 3b      Ansichten eines Ferritkerns mit verjüngtem Mittelsteg zum Aufbau einer nichtlinearen Induktivität;

Fig. 4      eine Schnittansicht durch einen Ringkern, bestehend aus zwei unterschiedlichen Materialien zum Aufbau einer nichtlinearen Induktivität, und

Fig. 5      ein Diagramm, das die Abhängigkeit der Induktivität der nichtlinearen Reaktanz als Funktion vom Lampenbetriebsstrom zeigt.

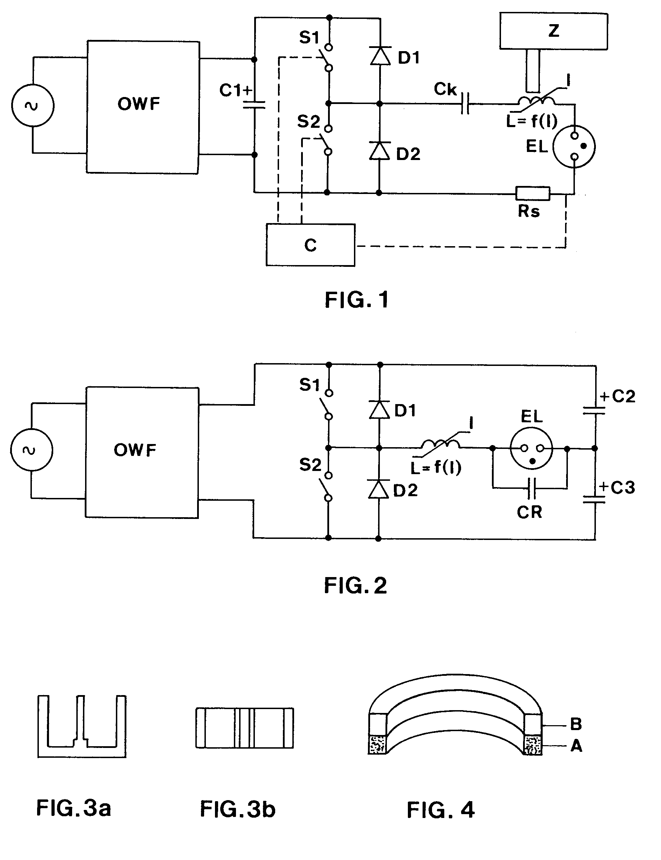

Fig. 1 zeigt ein erstes Ausführungsbeispiel der Schaltungsanordnung der Erfindung. Diese Leistungsschaltungsanordnung ist über eine Schaltungsanordnung OWF, die aus einer Gleichrichterschaltung und einem aktiven Oberwellenfilter (Power Factor Corrector) besteht, an eine Netzwechselspannungsquelle von z.B. 220 V gekoppelt. Das aktive Oberwellenfilter erzeugt an seinen Ausgangsklemmen eine konstante Gleichspannung von ca. 400 V.

An den Ausgangsklemmen ist ein Zwischenkreis-Kondensator C1 angeschlossen, der der Energiepufferung während der Netzspannungsnulldurchgänge dient. Außerdem ist an den Ausgangsklemmen die erfindungsgemäße Schaltungsanordnung zum Betrieb einer Entladungslampe EL angeschlossen, die vorzugsweise eine Hochdruckentladungslampe ist.

Wesentliche Elemente der erfindungsgemäßen Schaltungsanordnung sind zwei Leistungsschalter S1, S2, welche in Halbbrückenkonfiguration an dem Verbindungspunkt von S1 und S2 eine Rechteckwechselspannung erzeugen. Dies erfolgt durch eine Gegentaktsteuerung der beiden Schalter S1 und S2.

Im Lampenkreis ist in Reihe zur Lampe EL eine Lampendrossel geschaltet, die eine nichtlineare Reaktanz L bildet.

Ein Koppelkondensator Ck dient als zusätzliches Energiespeicherelement im Lampenkreis. Für den Freilauf des Lampenstroms beim Umschalten der Halbbrücke sind parallel zu den Schaltelementen S1 und S2 Dioden D1 bzw. D2 vorgesehen, die in Sperrichtung zur Gleichspannung der Schaltungsanordnung OWF geschaltet sind.

Die Lampe wird mittels einer Zündvorrichtung Z gezündet, die durch mindestens eine zusätzliche Wicklung auf der nichtlinearen Reaktanz L gebildet ist.

Durch eine zusätzliche Schaltungsanordnung Z wird ein Spannungsimpuls erzeugt, der auf die zuvor genannte zusätzliche Wicklung eingekoppelt wird. Über das transformatorische Verhältnis der Wicklungszahl wird an dem lampenseitigen Ende der nichtlinearen Reaktanz ein Hochspannungsimpuls erzeugt, der zur Zündung der Entladungslampe führt.

In Reihe zur Entladungslampe EL ist eine Strommeßeinrichtung Rs geschaltetet, die Teil einer Steuerschaltung C ist bzw. mit dieser verbunden ist. Diese Steuerschaltung steuert die Schalter S1 und S2. Diese erzeugen an ihrem gemeinsamen Verbindungspunkt eine Rechteckwechselspannung definierter Frequenz. Der Betriebsstrom der Lampe ergibt sich aus dem Zusammenwirken des reaktiven Blindwiderstandes der nichtlinearen Reaktanz L mit dieser Rechteckwechselspannung. Die Schalter S1 und S2 werden in einem ersten Betriebszustand mit einer relativ hohen Frequenz $f_H$ so angesteuert, daß der Strom $I_H$ zum Betrieb der Entladungslampe Werte annimmt, bei denen die nichtlineare Reaktanz L maximal den ersten Wert L' annimmt, und werden in einem zweiten Betriebszustand mit einer relativ niedrigen Frequenz $f_T$ so angesteuert, daß der Strom $I_T$ zum Betrieb der Entladungslampe EL Werte annimmt, bei denen die nichtlineare Reaktanz L zwischem dem ersten Wert L' und dem zweiten Wert L" liegt.

Die Strommeßeinrichtung Rs dient der Ausregelung der Stromamplitude über die Variation des Schaltverhaltens der nichtlinearen Reaktanz L, welche zum Beispiel über den Temperatureinfluß eines in der Reaktanz vorhandenen Kernmaterials hervorgerufen wird.

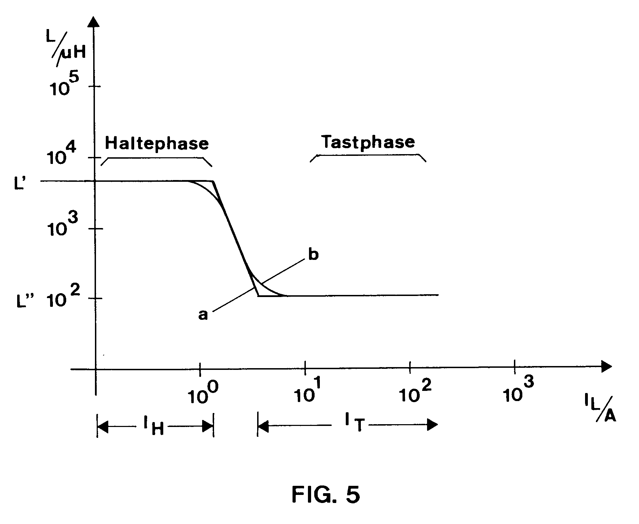

Das Betriebsverhalten der nichtlinearen Induktivität wird unten im Zusammenhang mit Fig. 5 beschrieben.

Fig. 2 zeigt ein zweites Ausführungsbeispiel der Erfindung. Die Unterschiede zum ersten Ausführungsbeispiel sind wie folgt: Die Zündvorrichtung Z ist entfallen, da hier ein Resonanzkondensator CR parallel zur Lampe L geschaltet ist, mittels dessen eine Resonanzzündung der Lampe L zusammen mit der nichtlinearen Reaktanz L erfolgt. Der Zwischenkreis-(Elektrolyt-)Kondensator C1, der im ersten Ausführungsbeispiel an den Ausgangsklemmen der Schaltungsanordnung OWF angeschlossen ist, ist in zwei separate Zwischenkreis-(Elektrolyt-)Kondensatoren C2, C3 getrennt, die zusammen die gleiche Wirkung wie der Zwischenkreis-Kondensator C1 des ersten Ausführungsbeispiels haben. Vorzugsweise ist der Kapazitätswert der Reihenschaltung von C2 und C3 gleich dem Kapazitätswert von C1. Der Koppelkondensator Ck (Figur 1) entfällt; die Lampe EL wird an den gemeinsamen Verbindungspunkt von C2 und C3 angeschlossen.

Bei dem Ausführungsbeispiel nach Fig. 2, ist die Impulszündung entsprchend dem Ausführungsbeispiel nach Fig. 1 durch eine Resonanzzündung mit dem Resonanzkondensator CR ersetzt. Vorteile der Impulszündung nach Fig. 1 sind ein niedriger Leistungsverbrauch zum Aufbau der Hochspannung sowie eine relativ gute Reproduzierbarkeit der Zündspannung über die Lebensdauer des Vorschaltgeräts. Die Vorteile der Schaltungsanordnung des zweiten Ausführungsbeispiels mit getrenntem Zwischenkreis-Elektrolytkondensator besteht darin, daß der Koppelkondensator entfallen kann, von dem eine erhebliche Geräuschentwicklung ausgehen kann.

Die Steuerschaltung C mit der Strommeßeinrichtung Rs (Figur 1) kann ebenfalls in die Schaltung nach Figur 2 integriert werden.

Fig. 5 zeigt den Verlauf der Induktivität der nichtlinearen Reaktanz L (Lampendrossel), aufgetragen über den Lampenbetriebsstrom $I_L$.

Die Grundlage der Dimensionierung und des Aufbaus der nichtlinearen Reaktanz bilden die Betriebsströme $I_L$ in einem ersten und einem zweiten Betriebszustand und die in Figur 5 nicht dargestellten zugehörigen Betriebsfrequenzen.

Aus diesen Betriebsströmen sowie ihrem zeitlichen Verhältnis ergeben sich dann die gewünschten lichttechnischen Parameter der Lampe.

In dem ersten Betriebszustand (Haltephase) ist der Betriebsstrom $I_L$ so klein (Wert $I_H$), daß sich ein relativ hoher Induktivitätswert L' ergibt. In dem zweiten Betriebszustand (Tastphase) ist der Betriebsstrom $I_L$ so groß (Wert $I_T$), daß sich ein relativ niedriger Induktivitätswert L" ergibt. Die Umschaltung zwischen den beiden Betriebsbereichen erfolgt durch eine Frequenzänderung in der Ansteuerung der beiden Leistungsschalter S1, S2 (Figuren 1 und 2). Figur 5 zeigt sowohl den idealen (a) als auch den realen (b) Verlauf der Funktion L = f(I).

Die Reaktanz L ist also zwischen den zwei Werten L' und L" schaltbar, wobei das Verhältnis L'/L" zwischen 10 und 50 liegt und vorzugsweise 40 beträgt.

Dabei ist zu beachten, daß der Umschaltpunkt bzw. das Übergangsgebiet von der Temperatur des Kernmaterials (Figuren 3 und 4) der nichtlinearen Reaktanz L abhängt.

Der Übergangsbereich zwischen L' (ungesättigte Induktivität) und L" (gesättigte Induktivität) wird so gewählt, daß bei maximal auftretendem Betriebsstrom in dem ersten Betriebszustand (Haltephase) und maximal vorkommender Kerntemperatur die Sättigungsgrenze noch nicht erreicht wird. Erfindungsgemäß ist in diesem Zusammenhang die Ausregelung von störenden Temperatureinflüssen mittels der Strommeßeinrichtung Rs und der Steuerschaltung C vorgesehen, welche bei Verwendung einer Reaktanz mit einem Kern auftreten.

Der zweite Betriebszustand ($I_T$, L") ist kürzer als der erste Betriebszustand ($I_H$, L'); das zeitliche Verhältnis des ersten Betriebszustandes zum zweiten Betriebszustand liegt etwa zwischen 10 und 30.

Ein wie in Fig. 5 gezeigter Kennlinienverlauf läßt sich beispielsweise durch eine handelsübliche Ferritkernbauform (z.B. mit den üblichen Bezeichnungen E, RM, P, ETD, usw.) erreichen, bei der man den Mittelsteg gegenüber den Außenschenkeln verjüngt. Dies geschieht durch Schleifen oder bereits durch entsprechende Formgebung beim Pressen des Ferritpulvers. Der Mittelsteg kann über seine gesamte Länge oder nur über einen Teil seiner Länge verjüngt werden. Der beispielhafte Aufbau eines auf einer Teillänge verjüngten Ferritkerns ist in Draufsicht in Fig. 3a und in Seitenansicht in Fig. 3b gezeigt.

Aus der Kombination zweier Ringkerne unterschiedlicher Materialeigenschaften kann ebenfalls eine solche umschaltbare Induktivität gebildet werden. Dabei wird ein niederpermeabler Pulverkern A (z.B. Eisenpulver, Permaloypulver oder ähnliches) mit hoher Sättigungsmagnetisierung auf einen hochpermeablen Ferritkern B mit kleiner Sättigungsmagnetisierung montiert (z.B. geklebt). Beide Kerne werden dann gemeinsam bewickelt. Fig. 4 zeigt einen Schnitt durch eine solche Anordnung.

Die erfindungsgemäße Schaltungsanordnung wird vorzugsweise wie folgt betrieben: Für die Haltephase (1. Betriebszustand) wird ein Haltestrom von 0,3 A bis 0,5 A bei einer Frequenz von 80 kHz bis 100 kHz eingestellt. Für die Tastphase (2. Betriebszustand) wird ein Impulsstrom von 20 A bis 30 A bei einer Frequenz von 15 kHz bis 25 kHz eingestellt. Die zeitliche Dauer des 2. Betriebszustandes (Burst) beträgt etwa 200 µs. Dies bedeutet, daß ein Burst (Impulspaket) in der Tastphase aus etwa sechs Einzelschwingungen besteht. Die Wiederholfrequenz der Impulsgruppe bzw. der Tastphase kann zwischen 160 Hz und 400 Hz variieren.

Die Schaltelemente S1 und S2 sind als Leistungstransistoren ausgeführt und werden in dieser Applikation mit einem Tastverhältnis von 50% invers zueinander angesteuert. Als Leistungsschalter werden vorzugsweise Insulated Gate Bipolar Transistoren IGBT verwendet.

Die IGBTs werden induktiv mit einem in der Steuerschaltung C angeordneten Steuertransformator angesteuert. Der Steuertransformator hat primär z.B. 50 Windungen und zwei getrennten Sekundärwicklungen von z.B. je 120 Windungen.

Gemäß der Erfindung genügen zum Aufbau des Leistungsteils (Schaltungsanordnung nach den Ansprüchen 1 bis 7) eines elektronischen Vorschaltgeräts zum Impulsbetrieb von Entladungslampen zwei Leistungsschalter S1, S2. Die Umschaltung zwischen den beiden vorgesehenen Betriebszuständen (Haltephase und Tastphase) erfolgt unter Verwendung einer in den Lampenkreis in Serie zu der Lampe geschaltete nichtlineare Reaktanz. Die Reaktanz des Blindwiderstands ist dabei vom Strom abhängig, der durch den Blindwiderstand fließt. Der Betrieb der Lampe in der Haltephase bzw. in der Tastphase erfordert jeweils unterschiedliche Stromstärken, was entsprechend unterschiedliche Reaktanzen in der Haltephase bzw. Tastphase zur Folge hat.

## Patentansprüche

1.  Schaltungsanordnung zum Impulsbetrieb einer Entladungslampe, insbesondere einer Hochdruckentladungslampe, mit

    -   einer Gleichspannungsquelle (OWF);
    -   einer Halbbrücke aus zwei Schaltelementen (S1, S2);
    -   einem Blindwiderstand (L, Ck), der mit der Entladungslampe (EL) in Reihe geschaltet ist, und
    -   einer Einrichtung (Z; CR) zum Zünden der Entladungslampe (EL);

    dadurch gekennzeichnet, daß der Blindwiderstand (L; Ck, C2, C3) eine nichtlineare Reaktanz (L) hat.

2.  Schaltungsanordnung gemäß Anspruch 1, dadurch gekennzeichnet, daß die Reaktanz (L) des Blindwiderstands (L; Ck, C2, C3) zwischen im wesentlichen einem ersten und einem zweiten Wert (L', L") schaltbar ist.

3.  Schaltungsanordnung gemäß Anspruch 2, dadurch gekennzeichnet, daß das Verhältnis (L'/L") aus den beiden Reaktanzwerten zwischen 10 und 50 liegt.

4.  Schaltungsanordnung gemäß Anspruch 3, dadurch gekennzeichnet, daß das Reaktanzverhältnis (L'/L") etwa 40 beträgt.

5.  Schaltungsanordnung gemäß einem der vorhergehenden Ansprüche, dadurch gekennzeichnet, daß die nichtlineare Reaktanz (L) einen Ferritkern mit wenigstens teilweise verjüngtem Mittelsteg aufweist.

6.  Schaltungsanordnung gemäß einem der vorhergehenden Ansprüche, dadurch gekennzeichnet, daß die nichtlineare Reaktanz zwei Ringkerne unterschiedlicher Materialeigenschaften aufweist.

7.  Schaltungsanordnung gemäß Anspruch 6, dadurch gekennzeichnet, daß der eine Ringkern ein niederpermeabler Pulverkern (A) mit hoher Sättigungsmagnetisierung ist und der andere Ringkern ein hochpermeabler Ferritkern (B) mit kleiner Sättigungsmagnetisierung ist, und daß beide Ringkerne übereinander montiert sind.

8. Elektronisches Vorschaltgerät für eine Entladungslampe (EL), welches aufweist:

   - eine Gleichspannungsquelle (OWF);
   - eine Schaltungsanordnung nach einem der Ansprüche 1 bis 7 und
   - eine Steuerschaltung (C) zum Ansteuern der Schaltelemente (S1, S2) der Schaltungsanordnung in der Weise, daß in einem ersten Betriebszustand die Schaltelemente (S1, S2) mit einer relativ hohen Frequenz $f_H$ so angesteuert werden, daß der Strom $I_H$ zum Betrieb der Entladungslampe Werte annimmt, bei denen die nichtlineare Reaktanz (L) maximal den ersten Wert (L') annimmt, daß in einem zweiten Betriebszustand die Schaltelemente (S1, S2) mit einer relativ niedrigen Frequenz $f_T$ so angesteuert werden, daß der Strom $I_T$ zum Betrieb der Entladungslampe (EL) Werte annimmt, bei denen die nichtlineare Reaktanz (L) zwischen dem ersten Wert (L') und dem zweiten Wert (L") liegt.

9. Vorschaltgerät gemäß Anspruch 8, dadurch gekennzeichnet, daß der Strom $I_H$ zwischen 0,3 A und 0,5 A und die Frequenz $f_H$ zwischen 80 kHz und 100 kHz liegt.

10. Vorschaltgerät gemäß Anspruch 8 oder 9, dadurch gekennzeichnet, daß der Strom $I_T$ zwischen 20 A und 30 A und die Frequenz $f_T$ zwischen 15 kHz und 25 kHz liegt.

11. Vorschaltgerät gemäß einem der Ansprüche 8 bis 10, dadurch gekennzeichnet, daß der zweite Betriebszustand kürzer als der erste Betriebszustand ist.

12. Vorschaltgerät gemäß Anspruch 11, dadurch gekennzeichnet, daß das zeitliche Verhältnis des ersten Betriebszustandes zum zweiten Betriebszustand etwa zwischen 10 und 30 liegt.

13. Vorschaltgerät gemäß einem der Ansprüche 8 bis 12, dadurch gekennzeichnet, daß die Steuerschaltung (C) und die Schaltungsanordnung gemäß einem der Ansprüche 1 bis 7 induktiv gekoppelt sind.

14. Vorschaltgerät gemäß einem der Ansprüche 8 bis 13, dadurch gekennzeichnet, daß die Schaltelemente (S1, S2) durch Leistungsschaltungstransistoren, vorzugsweise durch Insulated Gate Bipolar Transistoren realisiert sind.

15. Vorschaltgerät gemäß einem der Ansprüche 8 bis 14, dadurch gekennzeichnet, daß die Zündung der Entladungslampe (EL) durch eine Zündvorrichtung (Z) erfolgt, die durch mindestens eine zusätzliche Wicklung auf der nichtlinearen Reaktanz (L) gebildet ist.

16. Vorschaltgerät gemäß einem der Ansprüche 8 bis 14, dadurch gekennzeichnet, daß parallel zu der Entladungslampe (EL) eine Kapazität (CR) angeordnet ist.

17. Vorschaltgerät nach einem der Ansprüche 8 bis 16, dadurch gekennzeichnet, daß eine Strommeßeinrichtung (Rs) zur Messung des durch die Entladungslampe (EL) fließenden Betriebsstroms vorgesehen ist, die mit der Steuerschaltung (C) verbunden ist.

18. Vorschaltgerät nach einem der Ansprüche 8 bis 17, dadurch gekennzeichnet, daß die Steuerschaltung (C) die Schaltelemente (S1, S2) in dem zweiten Betriebszustand in der Weise steuert, daß die Amplitude des Betriebsstromes im wesentlichen konstant gehalten wird.

19. Vorschaltgerät nach einem der Ansprüche 8 bis 18, dadurch gekennzeichnet, daß anstelle eines am Ausgang der Gleichspannungsquelle (OWF) angeordneten Zwischenkreiskondensators (C1, Figur 1) zwei in Reihe geschaltete Kapazitäten (C2, C3) angeordnet sind, wobei der Verbindungspunkt der beiden Kapazitäten mit der Entladungslampe (EL) verbunden ist.

**FIG. 1**

**FIG. 2**

**FIG.3a**　　**FIG.3b**　　**FIG. 4**

FIG. 5